# EUROPEAN PATENT APPLICATION

(11) **EP 3 543 036 A1**
(43) Date of publication of application: **25.09.2019**
(21) Application number: 17872263.3
(22) Date of filing: 20.11.2017
(51) Int. Cl.: B60C 7/14, B60B 9/26, B60C 13/04

(54) **NON-PNEUMATIC TIRE AND TWO-WHEELED VEHICLE**

(30) Priority: 18.11.2016 JP 2016225109
(71) Applicant: Bridgestone Corporation, Tokyo 104-8340 (JP)
(72) Inventor: ABE, Akihiko, Tokyo 104-8340 (JP); SATOU, Hiroshi, Tokyo 104-8340 (JP); SHOJI, Takanori, Tokyo 104-8340 (JP); NISHIDA, Masashi, Tokyo 104-8340 (JP); OTA, Masao, Ageo-shi Saitama 362-8520 (JP); KAWANO, Mitsunobu, Ageo-shi Saitama 362-8520 (JP)
(74) Representative: Oxley, Robin John George
(86) International application number: PCT/JP2017/041634
(87) International publication number: WO 2018/092901

(57) **Abstract**

A non-pneumatic tire includes an inner cylinder (6) that is attachable to an axle (15a), an outer cylinder (4) that surrounds the inner cylinder from the outside in the radial direction of the tire, and an elastically deformable connection member (3) that connects the inner cylinder and the outer cylinder to each other. A light-emitting part or a reflecting part that reflects light is provided in at least one portion of the inner cylinder, the outer cylinder, and the connection member.

## Description

### Technical Field

The present invention relates to a non-pneumatic tire and a two-wheeled vehicle.

Priority is claimed on Japanese Patent Application No. 2016-225109, filed on November 18, 2016, the content of which is incorporated herein by reference.

### Background Art

Non-pneumatic tires such as the non-pneumatic tire that is disclosed in Patent Document 1 are known in the related art. The non-pneumatic tire is provided with an inner cylinder attached to an axle, an outer cylinder surrounding the inner cylinder from the outside in the radial direction of the tire, and an elastically deformable connection member connecting the inner cylinder and the outer cylinder to each other. The inner cylinder is attached to the axle via a wheel or the like. Vibration transmission from a ground surface to the wheel and the axle can be suppressed by the connection member being elastically deformed.

This type of non-pneumatic tire does not become flat, and thus it is desirable to use the tire for a bicycle or the like in place of existing pneumatic tires.

### Citation List

### Patent Document

[Patent Document 1] Japanese Unexamined Patent Application, First Publication No. 2015-609

### Summary of Invention

### Technical Problem

In a bicycle using existing pneumatic tires, a reflector that reflects light emitted from the side is attached to a spoke part so that the visibility at a time when a tire part is viewed from the side is improved. In the non-pneumatic tire, the elastic deformation of the connection member may be hindered once a reflector is attached to the connection member. Accordingly, the connection member is not preferable as part of reflector attachment. It is necessary to enlarge the connection member to a certain extent in the radial direction of the tire in order to ensure the vibration absorption performance of the connection member. However, the enlargement of the connection member in the radial direction of the tire leads to a relative decrease in wheel diameter. In a case where a reflector is attached to the small-diameter wheel, the distance of the reflector with respect to the axle decreases, and then the visibility of the tire declines as compared with conventional cases.

As described above, it is not easy to ensure both the vibration absorption performance of a connection member and the visibility of the connection member as viewed from the side in a case where a non-pneumatic tire is used for a bicycle.

The present invention has been made in view of such circumstances, and an object of the present invention is to provide a non-pneumatic tire in which both the vibration absorption performance of a connection member and the visibility of the connection member from the side are ensured.

### Solution to Problem

In order to solve the above problems, a non-pneumatic tire according to a first aspect of the present invention includes an inner cylinder attachable to an axle, an outer cylinder surrounding the inner cylinder from an outside in a radial direction of the tire, and an elastically deformable connection member connecting the inner cylinder and the outer cylinder to each other. A light-emitting part or a reflecting part reflecting light is provided in at least one portion of the inner cylinder, the outer cylinder, and the connection member.

In the non-pneumatic tire of the above aspect, the light-emitting part or the reflecting part reflecting light is provided in at least one portion of the inner cylinder, the outer cylinder, and the connection member. In a case where the reflecting part is provided by, for example, a reflecting material being mixed into the material that forms the connection member or a paint containing a reflecting material being applied to the connection member, it is possible to ensure the visibility of the connection member while suppressing elastic deformation being hindered by the reflecting part. In a case where the light-emitting part is provided by, for example, a light-emitting material such as a stress light-emitting material and a luminous material being mixed into the material that forms the connection member or the light-emitting materials being applied to the connection member, it is possible to ensure the visibility of the connection member while suppressing the elastic deformation of the connection member being hindered by the light-emitting part.

As described above, according to the non-pneumatic tire of the present invention, it is possible to ensure visibility by means of the reflecting part or the light-emitting part while ensuring vibration absorption performance by suppressing the elastic deformation of the connection member being hindered.

Here, the reflecting part or the light-emitting part may be formed of a coating layer covering at least one portion of the inner cylinder, the outer cylinder, and the connection member.

Once a reflecting material or the like is mixed into the material that forms the connection member or the like, for example, stress concentration may occur around the reflecting material or the like and the strength of the connection member or the like may decline. In a case where the coating layer covering one portion of the connection member or the like forms the reflecting part or the light-emitting part, it is possible to suppress the appearance of a place of stress concentration in the connection member or the like that is attributable to a reflecting material or the like. In addition, the connection member or the like can be formed of a material that is optimal for ensuring the vibration absorption performance.

When the non-pneumatic tire is manufactured, it is possible to easily form the reflecting part or the light-emitting part by forming the coating layer on the surface of the connection member or the like after forming the connection member or the like.

### Advantageous Effects of Invention

According to the above aspect of the present invention, it is possible to provide a non-pneumatic tire in which both the vibration absorption performance of a connection member and the visibility of the connection member from the side are ensured.

### Brief Description of Drawings

FIG. 1 is a side view of a bicycle provided with a non-pneumatic tire according to the present embodiment.
FIG. 2 is an A-A cross section arrow view of the non-pneumatic tire of FIG. 1.

### Description of Embodiments

### (First Embodiment)

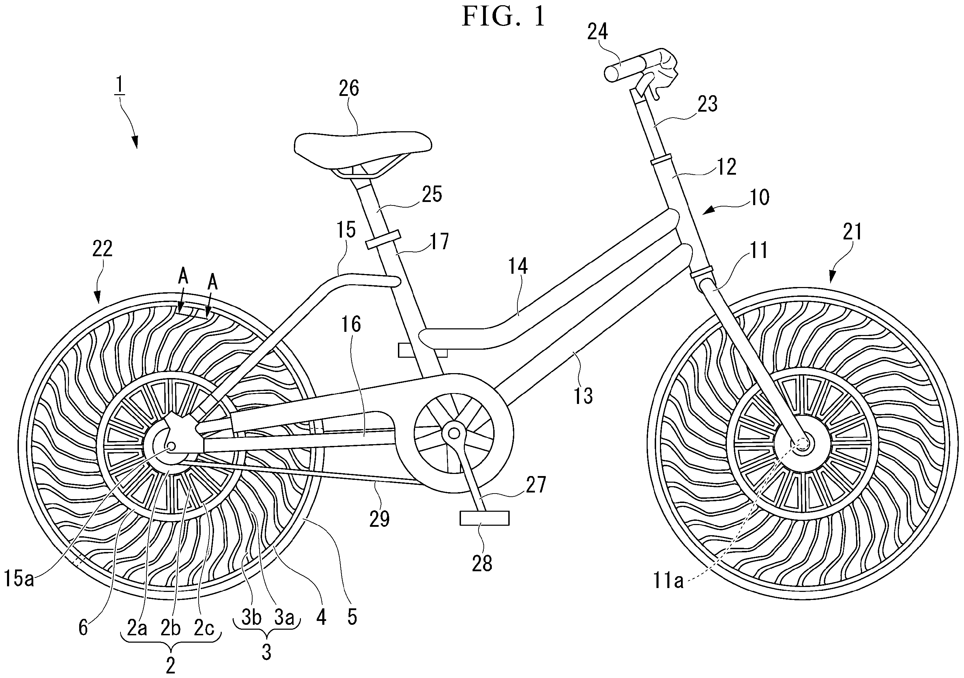

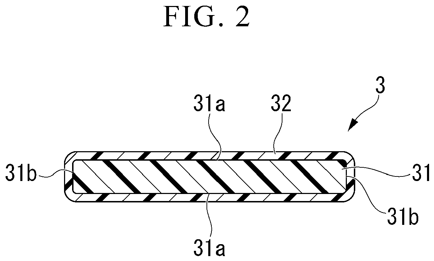

Hereinafter, the configuration of a non-pneumatic tire according to the present embodiment will be described with reference to FIGS. 1 and 2. In each drawing used for the following description, the scale is appropriately changed so that each member is recognizable in size.

### (Vehicle Body)

As illustrated in FIG. 1, the non-pneumatic tire of the present embodiment is used as a front wheel 21 and a rear wheel 22 of a bicycle 1. The front wheel 21 and the rear wheel 22 are rotatably supported by a vehicle body 10 of the bicycle 1.

The vehicle body 10 is provided with a front fork 11, a head pipe 12, a down tube 13, a top tube 14, a seat tube 17, a seat stay 15, and a pair of chain stays 16.

The front wheel 21 rotates about an axle 11a disposed in the lower end portion of the front fork 11, and the rear wheel 22 rotates about an axle 15a disposed in the connecting portion between the seat stay 15 and the chain stay 16.

In the present embodiment, in a side view as viewed from the rotation axis direction of the rear wheel 22 (axial direction of the axle 15a), the direction circling about the rotation axis will be referred to as the circumferential direction of the tire, the direction orthogonal to the rotational axis will be referred to as the radial direction of the tire, and the direction along the rotation axis will be referred to as the width direction of the tire.

The front fork 11 is disposed in the front portion of the bicycle 1, and the head pipe 12 is connected to the upper end portion of the front fork 11. One end portion of the down tube 13 is connected to the rear portion side of the head pipe 12. The top tube 14 is connected to the part that is directly above the part of the head pipe 12 to which the down tube 13 is connected.

The down tube 13 and the top tube 14 extend gradually downward and rearward. The seat tube 17 extends gradually rearward and upward.

The front end portion of the seat stay 15 is connected to the rear side of the upper end portion of the seat tube 17. The rear end portion of the seat stay 15 and the rear end portion of the chain stay 16 are connected to each other in the vicinity of the axle of the rear wheel 22.

A sprocket (hereinafter, referred to as "rear sprocket"), which is not illustrated, is attached to and disposed coaxially with the rear wheel 22.

A handle stem 23 is inserted through the head pipe 12. The handle stem 23 is pivotable relative to the head pipe 12. A handle 24 is attached to the upper end of the handle stem 23.

A seat post 25 is fitted in the seat tube 17. A saddle 26 is attached to the upper end of the seat post 25.

One end portion of a crank 27 is attached to the connecting part between the lower end portion of the seat tube 17 and the front end portion of the chain stay 16 via a sprocket (hereinafter, referred to as "forward sprocket"), which is not illustrated. A pedal 28 is attached to the other end portion of the crank 27. The crank 27 is pivotable around a pivot axis along the left-right direction. The pedal 28 is positioned in the other end portion of the crank 27 and pivotable around a pivot axis along the left-right direction. The crank 27 and the pedal 28 are provided on the left side of the bicycle 1 as well. In other words, the bicycle 1 is provided with a pair of the cranks 27 and a pair of the pedals 28.

A chain 29 is wound around the front sprocket and the rear sprocket. The front sprocket rotates once a driver or the like applies a pedal force to the pedal 28. The rotation of the front sprocket is transmitted to the rear sprocket via the chain 29, and then the rear sprocket rotates and the rear wheel 22 rotates as a result of the rotation of the rear sprocket.

### (Non-pneumatic Tire)

The front wheel 21 and the rear wheel 22 have the same configuration. Hereinafter, the configuration of the rear wheel 22 will be described on behalf of the front wheel 21 and the rear wheel 22.

The rear wheel 22 is provided with an inner cylinder 6 attached to the axle 15a, an outer cylinder 4 surrounding the inner cylinder 6 from the outside in the radial direction of the tire, and an elastically deformable connection member 3 connecting the inner cylinder 6 and the outer cylinder 4 to each other. A tread member 5 is disposed on the outer peripheral surface of the outer cylinder 4.

The inner cylinder 6 is attached to the axle 15a via a wheel 2. The central axes of the inner cylinder 6 and the outer cylinder 4 are disposed coaxially with the axle 15a. The inner cylinder 6, the connection member 3, and the outer cylinder 4 are disposed such that the respective tire-width-direction middle portions of the inner cylinder 6, the connection member 3, and the outer cylinder 4 coincide with one another in the width direction of the tire.

The inner cylinder 6, the connection member 3, and the outer cylinder 4 may be integrally formed or may be separately formed. The inner cylinder 6 and the wheel 2 may be integrally formed or may be separately formed.

The wheel 2 is provided with a mounting tube part 2a rotatably mounted on the axle 15a, an exterior part 2c surrounding the mounting tube part 2a from the outside in the radial direction of the tire, and a plurality of ribs 2b connecting the mounting tube part 2a and the exterior part 2c to each other. The mounting tube part 2a, the plurality of ribs 2b, and the exterior part 2c may be separately formed or may be integrally formed.

Each of the mounting tube part 2a and the exterior part 2c is formed in a cylindrical shape and disposed coaxially with the axle 15a. The plurality of ribs 2b are disposed at equal intervals in, for example, the circumferential direction of the tire. Each of the plurality of ribs 2b radially extends about the axle 15a.

The connection member 3 is formed in a plate shape rectangular when viewed from the circumferential direction of the tire and curved as a whole. The front and back surfaces of the connection member 3 face the circumferential direction of the tire, and the connection member 3 has a side surface facing the width direction of the tire. The connection member 3 is formed of an elastically deformable material such as a resin and connects the outer peripheral surface side of the inner cylinder 6 and the inner peripheral surface side of the outer cylinder 4 such that relative elastic displacement is possible. A plurality of the connection members 3 are disposed at equal intervals in the circumferential direction of the tire.

Each of the plurality of connection members 3 has an inside portion 3a connected to the inner cylinder 6 and an outside portion 3b connected to the outer cylinder 4. The inside portion 3a and the outside portion 3b are connected to each other in the tire-radial-direction middle portion of the connection member 3 and intersect at an obtuse angle at the connecting part in a side view. The thickness of the inside portion 3a in the circumferential direction of the tire is smaller than the thickness of the outside portion 3b in the circumferential direction of the tire. The thickness of the outside portion 3b in the circumferential direction of the tire gradually increases toward the outside in the radial direction of the tire.

The inner cylinder 6, the connection member 3, and the outer cylinder 4 may be formed of a resin or the like. Examples of the resin may include one resin, a mixture containing two or more resins, a mixture containing one or more resins and one or more elastomers, and an additive such as an anti-aging agent, a plasticizer, a filler, and a pigment.

The tread member 5 is formed of, for example, a thermoplastic material or vulcanized rubber obtained by vulcanization of natural rubber and/or a rubber composition. Examples of the thermoplastic material include a thermoplastic elastomer, a thermoplastic resin, and the like. Examples of the thermoplastic elastomer include amide-based thermoplastic elastomers (TPA), ester-based thermoplastic elastomers (TPC), olefin-based thermoplastic elastomers (TPO), styrene-based thermoplastic elastomers (TPS), urethane-based thermoplastic elastomers (TPU), thermoplastic rubber cross-linked bodies (TPV), and other thermoplastic elastomers (TPZ) and the like specified in Japanese Industrial Standard JIS K6418.

Examples of the thermoplastic resin include a urethane resin, an olefin resin, a vinyl chloride resin, a polyamide resin, and the like. From the viewpoint of wear resistance, it is preferable that the tread member 5 is formed of vulcanized rubber.

### (Reflecting Part)

As illustrated in FIG. 2, the connection member 3 of the present embodiment is provided with a coating layer 32 as a reflecting part. In the example illustrated in FIG. 2, the coating layer 32 is provided around a main body portion 31 of the connection member 3. In a cross-sectional view along the width direction of the tire, the main body portion 31 is formed in a rectangular shape with a pair of long sides 31a extending in the width direction of the tire and a pair of short sides 31b extending in the circumferential direction of the tire. The coating layer 32 covers the entire circumference of the pair of long sides 31a and the pair of short sides 31b. The coating layer 32 covers the entire main body portion 31.

The coating layer 32 may cover only one portion of the pair of long sides 31a and the pair of short sides 31b. In a case where the coating layer 32 that covers only the pair of short sides 31b is adopted, for example, it is possible to achieve manufacturing cost reduction by reducing the area of the coating layer 32 while ensuring visibility from the side.

The coating layer 32 as the reflecting part can be formed by application of a paint containing a reflecting material to the main body portion 31. Fine glass, metal powder, glossy resin, and the like can be used as the reflecting material.

Alternatively, the coating layer 32 as the reflecting part may be formed by surface treatment such as resin plating and metal plating being performed on the main body portion 31.

As described above, according to the present embodiment, the reflecting part is formed of the coating layer 32 that covers the main body portion 31 of the connection member 3. Accordingly, it is possible to ensure the visibility of the connection member 3 while suppressing the elastic deformation of the connection member 3 being hindered as compared with, for example, a case where a reflector is fixed to the connection member 3.

It is necessary to enlarge the connection member 3 in the radial direction by reducing the outer diameter of the wheel 2 to a certain extent in order to ensure the vibration absorption performance of the connection member 3 without increasing the outer diameter of the entire rear wheel 22. Accordingly, in a case where a reflector is attached to the wheel 2 so as not to inhibit the elastic deformation of the connection member 3, the distance between the axle 15a and the reflector decreases as the wheel 2 has a small diameter, and then the visibility of the rear wheel 22 is reduced as compared with a case where a reflector is attached in the vicinity of the tread member 5 as in the related art. In the present embodiment, the connection member 3 itself functions as a reflecting part, and thus it is possible to ensure the vibration absorption performance of the connection member 3 while suppressing a decline in the visibility of the rear wheel 22.

Once a reflecting material or the like is mixed into the material that forms the connection member 3, for example, stress concentration may occur around the reflecting material or the like and the strength of the connection member 3 may decline. In a case where the coating layer 32 covering the connection member 3 forms the reflecting part as in the present embodiment, it is possible to suppress the appearance of a place of stress concentration in the connection member 3 that is attributable to a reflecting material. In addition, the connection member 3 can be formed of a material that is optimal for ensuring the vibration absorption performance.

When the non-pneumatic tire is manufactured, it is possible to easily form the reflecting part by forming the coating layer 32 on the surface of the connection member 3 after forming the connection member 3.

### (Second Embodiment)

Next, a second embodiment according to the present invention will be described. The second embodiment is similar in basic configuration to the first embodiment. Accordingly, similar configurations will be denoted by the same reference numerals without redundant description and only different points will be described below.

In the present embodiment, the rear wheel 22 is provided with a light-emitting part instead of the reflecting part.

### (Light-emitting Part)

The coating layer 32 of the present embodiment is used as a light-emitting part. The coating layer 32 as the light-emitting part can be formed by application of a paint containing a light-emitting material to the main body portion 31. A fluorescent agent, a luminous material, a stress light-emitting material, and the like can be used as the light-emitting material.

Alternatively, the coating layer 32 as the light-emitting part may be formed by surface treatment such as resin plating and metal plating being performed on the main body portion 31.

According to the present embodiment, the light-emitting part is formed of the coating layer 32 that covers the main body portion 31 of the connection member 3. Accordingly, it is possible to ensure the visibility of the connection member 3 while suppressing the elastic deformation of the connection member 3 being hindered as compared with, for example, a case where a reflector is fixed to the connection member 3.

In a case where a stress light-emitting material is employed as the light-emitting material contained in the coating layer 32, the connection member 3 emits light as the connection member 3 is elastically deformed. As a result, the aspect of light emission of the plurality of connection members 3 changes as the rear wheel 22 rotates, and thus it is possible to achieve aesthetic improvement while ensuring the visibility of the rear wheel 22 from the side.

Once a light-emitting material is mixed into the material that forms the connection member 3, for example, stress concentration may occur around the light-emitting material or the like and the strength of the connection member 3 may decline. In a case where the coating layer 32 covering the connection member 3 forms the light-emitting part as in the present embodiment, it is possible to suppress the appearance of a place of stress concentration in the connection member 3 that is attributable to a light-emitting material. In addition, the connection member 3 can be formed of a material that is optimal for ensuring the vibration absorption performance.

When the non-pneumatic tire is manufactured, it is possible to easily form the light-emitting part by forming the coating layer 32 on the surface of the connection member 3 after forming the connection member 3.

The technical scope of the present invention is not limited to the above embodiments, and various modifications are possible without departing from the scope of the present invention.

For example, although the reflecting part or the light-emitting part is formed of the coating layer 32 covering the entire surface of the main body portion 31 of the connection member 3 in the embodiments described above, the present invention is not limited thereto. For example, the coating layer 32 may cover one portion of the connection member 3. Alternatively, the coating layer 32 may cover one or every portion of the wheel 2, the inner cylinder 6, and the outer cylinder 4.

The reflecting part or the light-emitting part may not be formed of the coating layer 32. For example, the main body portion 31 itself may be used as the reflecting part or the light-emitting part by a reflecting material or a light-emitting material being mixed into the material that forms the main body portion 31. Alternatively, the reflecting part or the light-emitting part may be formed by mixing of a reflecting material or a light-emitting material into the materials that form the wheel 2, the inner cylinder 6, and the outer cylinder 4.

Although the front wheel 21 and the rear wheel 22 are equivalent in configuration to each other in the embodiments described above, the front wheel 21 and the rear wheel 22 may differ in configuration from each other. For example, only one of the rear wheel 22 and the front wheel 21 may be provided with the reflecting part or the light-emitting part. Alternatively, the front wheel 21 may have one of the reflecting part and the light-emitting part with the rear wheel 22 having the other.

It is possible to appropriately replace components in the above-described embodiments with known components without departing from the scope of the present invention, and the above-described embodiments and modification examples may be combined as appropriate.

For example, the first embodiment and the second embodiment may be combined so that both the reflecting material and the light-emitting material are mixed into the coating layer 32. In this case, the coating layer 32 functions as a reflecting part and a light-emitting part.

Alternatively, both the reflecting material and the light-emitting material may be mixed into the material that forms any of the wheel 2, the inner cylinder 6, the connection member 3, and the outer cylinder 4.

### Industrial Applicability

It is possible to provide a non-pneumatic tire in which both the vibration absorption performance of a connection member and the visibility of the connection member from the side are ensured.

### Reference Signs List

1: Bicycle (two-wheeled vehicle)
2: Wheel
3: Connection member
4: Outer cylinder
5: Tread member
6: Inner cylinder
10: Vehicle body
21: Front wheel (non-pneumatic tire)
22: Rear wheel (non-pneumatic tire)
32: Coating layer (reflecting part, light-emitting part)

## Claims

1. A non-pneumatic tire comprising:
an inner cylinder attachable to an axle;
an outer cylinder surrounding the inner cylinder from an outside in a radial direction of the tire; and
an elastically deformable connection member connecting the inner cylinder and the outer cylinder to each other,
wherein a light-emitting part or a reflecting part reflecting light is provided in at least one portion of the inner cylinder, the outer cylinder, and the connection member.

2. The non-pneumatic tire according to claim 1, wherein the reflecting part or the light-emitting part is formed of a coating layer covering the at least one portion of the inner cylinder, the outer cylinder, and the connection member.

3. A two-wheeled vehicle comprising:
the non-pneumatic tire according to claim 1 or 2; and
a vehicle body having the axle.
